(19) **Europäisches Patentamt**
**European Patent Office**
**Office européen des brevets**

(11) **EP 1 377 793 B1**

(12) **FASCICULE DE BREVET EUROPEEN**

(45) Date de publication et mention
de la délivrance du brevet:
**17.02.2010 Bulletin 2010/07**

(51) Int Cl.:
***G01B 1/00*** (2006.01)

(21) Numéro de dépôt: 02730338.7

(22) Date de dépôt: **04.04.2002**

(86) Numéro de dépôt international:
**PCT/FR2002/001174**

(87) Numéro de publication internationale:
**WO 2002/082010 (17.10.2002 Gazette 2002/42)**

(54) **EXTENSOMETRE A LONGUE BASE, A FIBRE OPTIQUE TENDUE ET RESEAU DE BRAGG, ET PROCEDE DE FABRICATION DE CET EXTENSOMETRE**

BRAGG-GITTER-DEHNNUNGSMESSER MIT LANGER BASIS UND GESPANNTEM OPTISCHEN FASER,SOWIE VERFAHREN ZU DESSEN HERSTELLUNG

LONG-BASE, STRETCHED FIBRE-OPTIC, BRAGG NETWORK EXTENSOMETER AND PRODUCTION METHOD FOR SAME

(84) Etats contractants désignés:
**DE GB IT**

(30) Priorité: **04.04.2001 FR 0104563**

(43) Date de publication de la demande:
**07.01.2004 Bulletin 2004/02**

(73) Titulaire: **COMMISSARIAT A L'ENERGIE ATOMIQUE**
**75015 Paris (FR)**

(72) Inventeurs:
• **DEWYNTER-MARTY, Véronique**
**F-91190 Gif Sur Yvette (FR)**
• **ROUGEAULT, Stéphane**
**F-92330 Sceaux (FR)**
• **FERDINAND, Pierre**
**F-78800 Houilles (FR)**

(74) Mandataire: **Poulin, Gérard**
**Société BREVATOME**
**3, rue du Docteur Lancereaux**
**75008 Paris (FR)**

(56) Documents cités:
**WO-A-00/60312       WO-A-99/32862**
**US-A- 5 594 819       US-A- 5 942 750**

**Description**

## DOMAINE TECHNIQUE

La présente invention concerne un extensomètre utilisant une fibre optique qui comporte au moins un réseau de Bragg ainsi qu'un procédé de fabrication de cet extensomètre.

Il est de plus en plus nécessaire de contrôler le vieillissement des ponts et, plus généralement, d'un grand nombre d'ouvrages et d'infrastructures de génie civil. La majorité de telles structures en béton et acier sont soumises à des conditions environnementales sévères (résultant du climat, des attaques chimiques et d'un trafic en croissance continue) qui expliquent leur vieillissement prématuré. La présence de moyens de surveillance précis et fiables, dont la durée de vie est bien entendu comparable à celle des ouvrages d'art que l'on surveille, est donc nécessaire, essentiellement pour des raisons de maintenance et de sécurité publique.

Plusieurs paramètres physiques, qui sont relatifs au vieillissement ou aux dégradations de ces ouvrages d'art, sont concernés. On peut, par exemple, citer les mesures de pH, de constitution chimique, de déformations et de contraintes, dans les matériaux dont ces ouvrages sont constitués, ainsi que la détection et le suivi des fissurations.

Dans le cadre de la présente invention, on s'intéresse plus particulièrement aux mesures de déformations ainsi qu'à la détection et au suivi de l'état de fissuration d'une structure.

Les mesures de déformations et d'allongements de grandes structures, du genre de celles que l'on rencontre en génie civil ou en géotechnique (par exemple les mines ou les terrains), sont actuellement faites à l'aide de divers capteurs, par exemple les extensomètres à cordes vibrantes ou les extensomètres inductifs, qui sont directement installés sur ces structures. D'autres techniques sans contact (utilisant par exemple les ultrasons ou des moyens optiques fonctionnant avec une lumière visible ou laser) sont également connues.

Il convient de noter que les instruments classiques (les capteurs mais aussi les moyens électroniques associés), qui sont installés sur les ouvrages d'art, sont fréquemment soumis à la foudre. Cette dernière les endommage et les rend inopérants, voire irremplaçables, quand ces capteurs et ces moyens électroniques sont noyés dans les structures surveillées.

Indiquons dès maintenant que l'on propose, dans la présente invention, d'utiliser les propriétés métrologiques des réseaux de Bragg (« Bragg gratings ») qui sont inscriptibles dans le coeur (« core ») des fibres optiques, de préférence monomodes, et d'adapter ces fibres par l'intermédiaire de moyens mécaniques et de points de fixation originaux, de manière à les utiliser en tant qu'extensomètres dans divers domaines, en particulier le génie civil, les travaux publics et la géotechnique.

La présente invention propose donc un extensomètre original, permettant des mesures de traction et de compression ainsi que la détection et le suivi de fissures.

Les applications et les utilisations de la présente invention concernent l'extensométrie dans les domaines du génie civil, des travaux publics et de la géotechnique, par exemple pour surveiller les ponts ou les viaducs routiers ou ferroviaires, les barrages hydroélectriques, les bâtiments de réacteurs nucléaires et les aéroréfrigérants associés à ces réacteurs, les immeubles ou bâtiments divers, les tunnels et les mines, les mouvements des roches et les avancées de terrains, ou pour contrôler les zones sismiques aériennes ou sous-marines, les canalisations enterrées, les pipelines, les canalisations appelées "risers", les digues et les plates-formes offshore.

## ETAT DE LA TECHNIQUE ANTERIEURE

Il est connu de photo-inscrire un réseau de Bragg dans le coeur même d'une fibre optique photosensible, généralement monomode. Ce réseau de Bragg consiste en une modulation spatiale de l'indice optique du coeur de la fibre dont la période A, c'est-à-dire le pas ("pitch") du réseau, définit la longueur d'onde spectrale de filtrage en transmission, appelée "longueur d'onde de Bragg" et notée $\lambda_B$, suivant l'accord de phase qui constitue la condition de Bragg et qui s'écrit :

$$\lambda_B = 2.n_{eff}.\Lambda \qquad (1)$$

où $n_{eff}$ est l'indice effectif du mode guidé.

Lorsque le réseau de Bragg est soumis à une déformation, la condition d'accord de Bragg est vérifiée à une longueur d'onde différente. La signature spectrale du réseau de Bragg est modifiée, en fonction d'un allongement, suivant une loi qui est linéaire au premier ordre et obéit à l'équation suivante :

$$\frac{\Delta\lambda_B}{\lambda_B} = (1 - p_e)\varepsilon = \left(1 - \frac{n^2_{eff}}{2}\left(p_{12}(1 - \nu) - p_{11}\nu\right)\right)\varepsilon \qquad (2)$$

où $\varepsilon$ est la déformation longitudinale suivant l'axe de la fibre optique qui est généralement en silice,

$p_e$ est la constante photo-élastique de la silice,

$p_{11}$ et $p_{12}$ sont les coefficients élasto-optiques, et

$\nu$ est le coefficient de Poisson de la silice.

Dans les extensomètres conformes à la présente invention, les réseaux de Bragg et les fibres optiques ont les propriétés suivantes :

- l'utilisation de fibres optiques rend les extensomètres insensibles aux perturbations électromagnétiques, la foudre ou les variations électromagnétiques n'ayant pas d'effet sur la transmission de la lumière,
- les propriétés intrinsèques des réseaux de Bragg, en termes de transmission ou de réflexion spectrale, sont stables au cours du temps dans un environnement tel que les bâtiments et les travaux publics,
- les réseaux de Bragg restent stables à des températures élevées, de plusieurs centaines de °C,
- ils peuvent être multiplexés spectralement, en série ou suivant diverses architectures ou topologies de réseaux (« networks »), permettant de relier de nouveaux extensomètres aux systèmes d'acquisition et de mesure,
- en les utilisant avec des instruments faisant des mesures spectrales, les déformations sont indépendantes de la puissance du signal et des pertes éventuelles (par exemple à cause du manque de reproductibilité des connexions et des courbures de fibres optiques) sur les lignes de mesure, ce qui est un très grand avantage dans le cadre de mesures de surveillance à long terme.

On connaît déjà divers extensomètres qui utilisent des fibres optiques pourvues de réseaux de Bragg.

Habituellement, les réseaux de Bragg sont collés sur des supports servant de corps d'épreuve, ou directement sur des fers à béton ou des câbles de pré-contraintes. Des corps d'épreuves métalliques ainsi instrumentés peuvent être insérés dans le béton.

A ce sujet, on consultera par exemple le document suivant :

[1] V. Dewynter-Marty, S. Rougeault, P. Ferdinand, D. Chauvel, E. Toppani, M. Leygonie, B. Jarret and P. Fenaux, Concrete strain measurements and crack detection with surface-mounted and embedded Bragg grating extensometers, 12th International Conférence on Optical Fiber Sensors, 28-31 Octobre 1997, USA, pages 600-603.

Sur le même principe de transducteur massif, les réseaux de Bragg peuvent être noyés à l'intérieur de barreaux composites.

A ce sujet, on consultera par exemple le document suivant :

[2] Extensomètre à réseau de Bragg et procédé de fabrication de cet extensomètre, invention de S. Magne, V. Dewynter-Marty, P. Ferdinand et M. Bugaud, demande de brevet français n°99 04084 du 1er avril 1999 correspondant à la demande internationale PCT/FR00/00806 du 30 mars 2000.

On connaît aussi des moyens d'interrogation des réseaux de Bragg et l'on peut les utiliser avec l'extensomètre objet de l'invention. Ces moyens sont fondés sur un démultiplexage spectral. Les spectres des lignes de mesure (si les capteurs sont multiplexés) sont obtenus à l'aide de composants du genre des cavités de Fabry-Perrot à balayage et permettent d'analyser, à diverses fréquences, les décalages spectraux des réseaux de Bragg et ainsi, par l'intermédiaire de leurs sensibilités, de calculer les variations du paramètre ou des paramètres physiques considérés (par exemple des déformations, des températures ou des pressions).

On connaît aussi des moyens qui utilisent des filtres spectraux et permettent le suivi de capteurs à réseaux de Bragg.

Les extensomètres connus présentent un inconvénient : du fait de la structure de ces extensomètres, la longueur de base de ces derniers ne peut guère dépasser un mètre.

## EXPOSÉ DE L'INVENTION

La présente invention a pour but de remédier à l'inconvénient précédent en proposant un extensomètre qui comporte une fibre optique munie d'au moins un réseau de Bragg, extensomètre dont la base de mesure est susceptible d'aller de quelques dizaines de centimètres à quelques mètres, voire quelques dizaines de mètres.

De façon précise, la présente invention a pour objet un extensomètre comprenant :

- une fibre optique, dans laquelle est formé au moins un réseau de Bragg, et
- au moins un corps d'épreuve qui est destiné à être rendu rigidement solidaire d'un matériau-hôte et qui entoure une partie de la fibre optique contenant ce réseau de Bragg,

toute déformation du matériau-hôte étant ainsi transmise à ce réseau de Bragg par l'intermédiaire du corps d'épreuve, ce réseau de Bragg étant alors apte à modifier une lumière se propageant dans la fibre, la déformation du matériau-hôte étant déterminée à partir de la lumière modifiée,

cet extensomètre étant caractérisé en ce que le corps d'épreuve comprend un tube dans lequel est disposée la partie de la fibre optique contenant le réseau de Bragg, les deux extrémités de cette partie étant respectivement fixées aux deux extrémités de ce tube et cette partie étant tendue, c'est-à-dire mise en pré-tension, entre ces deux extrémités du tube.

Selon un mode de réalisation préféré de l'extensomètre objet de l'invention, le corps d'épreuve comprend en outre deux embouts respectivement fixés aux deux extrémités du tube et la partie de la fibre est tendue entre ces deux embouts.

Selon un premier mode de réalisation particulier de l'extensomètre objet de l'invention, les deux embouts sont métalliques, la fibre optique est métallisée et les deux extrémités de la partie de cette fibre sont respectivement soudées aux deux embouts.

Selon un deuxième mode de réalisation particulier, les deux extrémités de la partie de la fibre sont respectivement collées aux deux embouts.

De préférence, les deux extrémités du tube sont respectivement soudées aux deux embouts.

De préférence, on utilise un tube et deux embouts métalliques et les deux extrémités du tube sont alors respectivement soudées aux deux embouts par une soudure à l'étain.

Dans un premier mode de réalisation particulier de l'invention, le corps d'épreuve est destiné à être noyé dans le matériau-hôte et les deux embouts sont respectivement pourvus de deux moyens d'ancrage dans le matériau-hôte.

Selon un deuxième mode de réalisation particulier, le corps d'épreuve est destiné à être fixé à la surface du matériau-hôte et les deux embouts sont respectivement pourvus de deux moyens de fixation ou de collage à cette surface du matériau-hôte.

Dans un mode de réalisation particulier de l'invention, l'extensomètre comprend une pluralité de corps d'épreuve qui sont montés en série.

La présente invention concerne aussi un procédé de fabrication de l'extensomètre objet de l'invention, dans lequel on tend la partie de la fibre optique entre les deux extrémités du tube et l'on fixe les deux extrémités de cette partie aux deux extrémités du tube.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue en coupe longitudinale schématique d'un premier mode de réalisation particulier de l'extensomètre objet de l'invention,
- la figure 2 est une vue en coupe longitudinale schématique d'un deuxième mode de réalisation particulier de l'extensomètre objet de l'invention,
- la figure 3 illustre schématiquement la mise en réseau de plusieurs extensomètres conformes à l'invention (quatre extensomètres dans cet exemple), et
- la figure 4 illustre schématiquement un exemple de dispositif de montage d'un extensomètre conforme à l'invention.

## EXPOSÉ DÉTAILLÉ DE MODES DE RÉALISATION PARTICULIERS

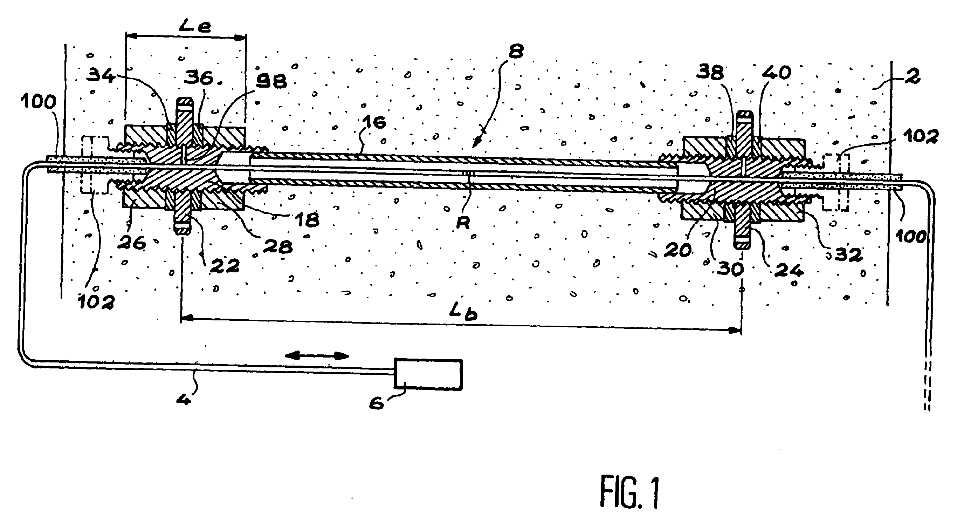

Les extensomètres conformes à l'invention, qui sont schématiquement représentés en coupe longitudinale sur les figures 1, 2 et 3, sont destinées à mesurer les déformations (contractions ou dilatations) d'un matériau hôte, qui dans ces exemples, est un ouvrage d'art en béton.

Chacun de ces extensomètres comprend une fibre optique contenant au moins un réseau de Bragg et, afin de mesurer aussi bien les déformations d'allongement que de contraction, la fibre contenant le réseau de Bragg est pré-tendue avec un allongement supérieur à la compression maximale admissible.

Ainsi, pour le béton, la dynamique en compression est de l'ordre de 2500 $\mu$ déformation (0,2%). On voit qu'une pré-tension de la fibre supérieure à cette valeur (par exemple 0,5%) est tout à fait possible.

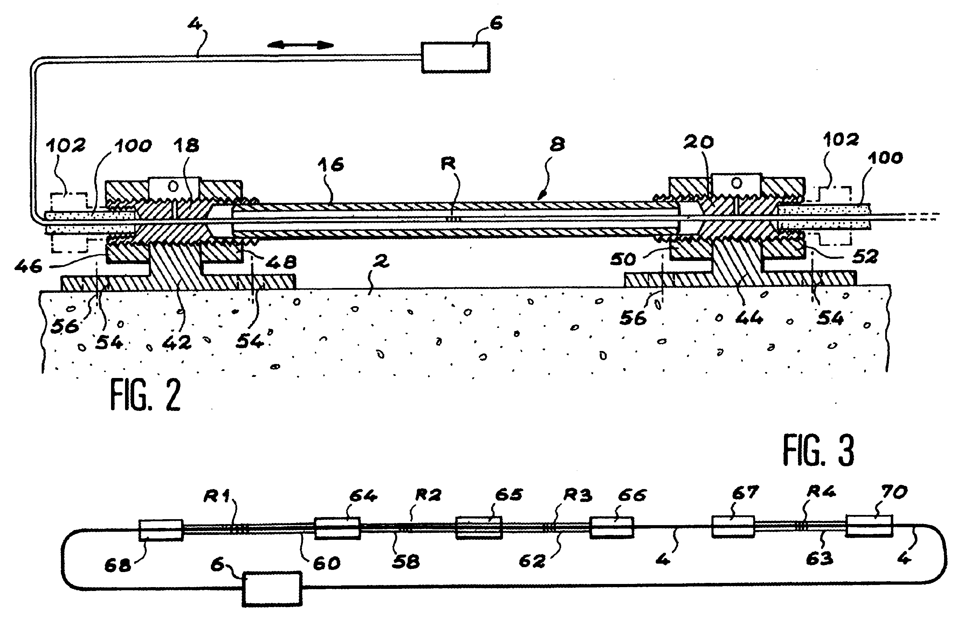

On voit sur les figures 1 et 2 la partie en béton 2 de cet ouvrage dont on veut étudier les déformations au moyen de l'un ou l'autre de ces extensomètres.

Chaque extensomètre comprend une fibre optique 4 de préférence monomode, par exemple en silice.

Dans le coeur de cette fibre optique est formée (par photo-inscription) au moins un réseau de Bragg (un seul réseau de Bragg R dans le cas des figures 1 et 2 et quatre réseaux de Bragg R1, R2, R3 et R4 dans le cas de la figure 3).

On voit sur les figures 1 à 3 des moyens de mesure 6 permettant « d'interroger » le ou les réseaux de Bragg et de mesurer les déformations subies par le béton.

Ces moyens de mesure sont prévus pour envoyer dans la fibre optique 4 une lumière d'une certaine longueur d'onde lorsqu'il y a un seul réseau de Bragg et des lumières de longueurs d'onde différentes lorsqu'il y a une pluralité de réseaux de Bragg (par exemple autant de longueurs d'onde qu'il y a de réseaux de Bragg).

Toute déformation du béton est transmise à un réseau de Bragg par l'intermédiaire du corps d'épreuve 8 (figures 1 et 2) que comporte l'extensomètre et sur lequel on reviendra par la suite.

Ce réseau de Bragg modifie alors la lumière qui lui correspond et cette lumière retourne aux moyens de mesure 6 par l'intermédiaire de la fibre optique et la déformation du béton est déterminée par ces moyens de mesure à partir de la lumière ainsi modifiée.

Dans l'exemple représenté, les moyens de mesure 6 sont reliés à une seule fibre optique, à savoir la fibre optique 4 portant le réseau de Bragg R.

Néanmoins, les moyens de mesure 6 peuvent comporter un commutateur ("switch") optique permettant d'adresser une fibre optique parmi N fibres optiques (N>1), de manière à relier, à un instant donné, la fibre adressée aux moyens de mesure 6. Ce commutateur optique permet donc d'alterner l'interrogation (envoi et récupération de lumière) d'un réseau de Bragg ou de lignes de capteurs à réseaux de Bragg, cette interrogation ayant éventuellement lieu alternativement par un côté de la fibre optique puis par l'autre côté de cette fibre et ainsi de suite, comme le montre la figure 3. Ce mode de réalisation rend plus fiable le système à un ou plusieurs extensomètres, en permettant à ce système de rester opérationnel même en cas de coupure accidentelle de la fibre.

Cependant, dans un mode de réalisation plus simple (non représenté), on peut interroger le ou les réseaux de Bragg par un seul côté de la fibre optique, l'autre côté étant libre c'est-à-dire non relié à l'extensomètre.

Dans un autre mode de réalisation non représenté, on peut envoyer la ou les lumières dans le ou les réseaux de Bragg par un côté de la fibre optique et récupérer des lumières éventuellement modifiées par l'autre côté de la fibre optique pour mesurer les déformations du béton.

Revenons aux figures 1 et 2. Le corps d'épreuve 8 de l'extensomètre conforme à l'invention que l'on voit sur la figure 1 ou la figure 2 comprend un tube central 16 et deux embouts 18 et 20 respectivement fixé aux deux extrémités de ce tube.

La partie de la fibre optique 4, dans le coeur de laquelle est formé le réseau de Bragg R, est libre à l'intérieur de ce tube 16 et tendue dans ce tube.

Une autre fibre non représentée, non tendue, peut éventuellement être jointe à cette fibre 4 de manière à mesurer la température.

Les deux extrémités de la partie de la fibre portant le réseau de Bragg sont respectivement fixées à l'intérieur des deux embouts 18 et 20 et cette partie de la fibre 4 est tendue entre les deux embouts.

Cette tension de la fibre est réalisée lors de la fabrication de l'extensomètre, permettant à ce dernier de réaliser des mesures de déformation en traction ainsi qu'en compression, suivant son axe longitudinal (axe du tube 16).

Lorsqu'un embout se déplace par rapport à l'autre, le réseau de Bragg est soumis à une déformation mesurable.

Il existe trois possibilités de fixation de la partie de la fibre 4 se trouvant dans le tube :

1) Si la fibre est préalablement métallisée (de façon connue), on peut souder cette partie dans les embouts.
2) Si la fibre ne comporte qu'une gaine mécanique, ou gaine de protection, généralement en polymère, ou si elle est privée d'une telle gaine, on peut coller la partie de la fibre dans les embouts.
3) Dans un autre mode de réalisation particulier non représenté, on peut prévoir un système de pince mécanique ou de cabestan pour la fixation de la partie de la fibre 4 dans le tube 16.

Il est possible de choisir la rigidité du corps d'épreuve 8 et donc celle du tube 16 en fonction du matériau-hôte 2 destiné à recevoir ce dernier.

Le tube 16, qui est un tube métallique, par exemple en acier inoxydable préalablement nickelé, est soudé par ses deux extrémités aux deux embouts qui sont également en acier inoxydable dans l'exemple considéré. Cette soudure a pour fonction essentielle le maintien de la pré-tension de la fibre pendant le stockage de l'extensomètre et sa mise en place dans la structure que l'on veut surveiller.

La pré-tension de la fibre peut aller de quelques grammes à quelques kilogrammes. Elle est fonction de la gamme de mesure souhaitée.

En fonction de la surface soudée et de la quantité de matière ajoutée, il est possible d'adapter la résistance mécanique des soudures du tube aux embouts.

L'extensomètre peut présenter une faible rigidité, afin de ne pas opposer de résistance aux déformations de la structure, ou être plus rigide et par exemple avoir un module d'Young équivalent très proche de celui du matériau-hôte. Pour ce faire, on utilise une soudure dite « souple », de préférence une soudure à l'étain utilisée habituellement en électronique.

La faible rigidité du tube 16 de l'extensomètre permet d'envisager des longueurs importantes pour cet extensomètre, qui peuvent aller jusqu'à quelques mètres, voire plus.

Il suffit pour cela d'adapter la longueur du tube central 16 (notons qu'une telle base de mesure n'est pas disponible avec les cordes vibrantes pour lesquelles la limite de la base de mesure se situe aujourd'hui vers 20 cm), tout en conservant, contrairement aux extensomètres « massifs », une faible intrusivité.

En effet, les extensomètres « massifs » ou « rigides », pour lesquels le réseau de Bragg est fixé sur toute sa longueur sur une tige métallique, présentent d'une part une résistance plus importante aux déformations de la structure à surveiller et par conséquent sont fortement intrusifs et, d'autre part, doivent être dimensionnés pour éviter le flambage de la tige dans le cas d'un fonctionnement en compression : plus la base de mesure est longue, plus le diamètre de la tige est élevé en vertu des règles de l'art en vigueur en résistance des matériaux. Il semble donc difficile d'envisager, avec ces extensomètres « rigides », des bases de mesure supérieures à une vingtaine de centimètres.

Au contraire, les bases de mesure possible avec un extensomètre conforme à l'invention sont typiquement comprises entre environ 0,1 m et quelques mètres. Il suffit pour cela d'adapter la longueur du tube central 16.

A partir de la configuration de base que l'on vient de décrire (tube central 16, fibre 4 avec réseau de Bragg R et deux embouts 18 et 20), plusieurs adaptations sont possibles permettant diverses utilisations.

Dans l'exemple de la figure 1, l'extensomètre est installé dans une structure lors de la construction de cette structure ou après carottage.

Dans ce cas, on ajoute à chaque embout 18 ou 20 un flasque d'ancrage 22 ou 24, vissé sur cet embout grâce à deux écrous 26-28 ou 30-32 qui emprisonnent le flasque correspondant par l'intermédiaire de deux rondelles 34-36 ou 38-40, comme on le voit sur la figure 1.

Dans l'exemple de la figure 2, l'extensomètre est installé à la surface d'un ouvrage d'art existant, fait en béton 2. Dans ce cas, les embouts 18 et 20 sont respectivement fixés sur deux cavaliers ou brides 42 et 44 par l'intermédiaire de deux écrous 46-48 ou 50-52 emprisonnant ce cavalier ou bride.

Dans le cas de la figure 1, les deux flasques définissent la base d'intégration des déformations.

Dans le cas de la figure 2, les deux cavaliers ou brides définissent cette base d'intégration.

Sur cette figure 2, chaque cavalier ou bride est pourvu de trous 54 prévus pour la fixation à l'ouvrage d'art par l'intermédiaire de moyens appropriés tels que des vis symbolisées par les traits mixtes 56.

Au lieu de cela, on pourrait coller les deux brides à la surface de l'ouvrage d'art.

On précise que, dans les exemples des figures 1 et 2, l'extrémité de la fibre 4, qui est représentée non reliée, peut être libre, ou reliée à un autre extensomètre, ou même reliée aux moyens de mesure 6.

L'exemple de la figure 3 illustre schématiquement la mise en réseau d'une pluralité d'extensomètres conformes à l'invention.

Dans cet exemple, on utilise quatre extensomètres utilisant la même fibre optique 4 et comportant respectivement des réseaux de Bragg R1, R2, R3 et R4 inscrits à différentes longueurs d'onde sur cette fibre 4.

Les trois premiers extensomètres sont juxtaposés en série, avec des points d'accrochage communs deux à deux. Le quatrième extensomètre est situé plus loin : une portion de la fibre 4 le sépare des trois autres extensomètres.

Il s'agit alors d'un assemblage permettant de réaliser des mesures distribuées.

Dans l'exemple de la figure 3, les trois extensomètres en série utilisent trois corps d'épreuve comprenant trois tubes de différentes longueurs.

L'un des tubes, formant un tube central 58, est relié aux deux autres tubes 60 et 62 par l'intermédiaire de deux embouts centraux 64 et 65. Ces deux autres tubes sont également pourvus, en leurs extrémités les plus éloignées du tube 58, respectivement de deux embouts terminaux 68 et 66.

Le quatrième extensomètre utilise un tube 63 pourvu, en ses extrémités, de deux embouts 67 et 70.

La fibre optique 4 traverse les embouts 68, 64, 65, 66, 67 et 70 et les tubes 60, 58, 62 et 63. L'un R1 des réseaux de Bragg se trouve entre l'embout terminal 68 et l'embout central 64. Le réseau de Bragg R2 se trouve entre les deux embouts centraux 64 et 65, le troisième réseau de Bragg R3 se trouve entre l'embout central 65 et l'embout terminal 66. Le quatrième réseau de Bragg R4 se trouve entre les embouts 67 et 70. La fibre optique est tendue entre les embouts voisins 68-64, 64-65, 66-66 et 67-70 et fixée dans ces embouts.

Dans un exemple non représenté, on monte deux extensomètres identiques en série, correspondant à deux bases de mesure de 0,5 m chacune. On utilise alors deux tubes ayant un embout commun tandis que deux embouts sont respectivement placés aux autres extrémités de ces tubes. On utilise alors une fibre optique portant deux réseaux de Bragg et cette fibre est tendue dans les deux tubes, entre les embouts.

La gamme de mesure des déformations se définit, pour chaque extensomètre, par l'application et la maîtrise de la pré-contrainte. Par exemple, pour qu'un extensomètre fonctionne en compression dans la gamme de déformation allant de -1000 $\mu$m/m à -3000 $\mu$m/m, la pré-tension nécessaire est typiquement supérieure à 300 g pour une fibre en silice de diamètre 125 $\mu$m.

En conséquence, la gamme de mesure est adaptable, notamment en compression, en fonction de la pré-tension exercée lors de la fabrication de l'extensomètre objet de l'invention.

On considère maintenant un procédé de fabrication d'un extensomètre conforme à l'invention. On décrit d'abord un exemple de banc de montage de l'extensomètre. Ce banc de montage permet de réaliser des extensomètres avec une excellente reproductibilité métrologique, notamment pour ce qui concerne l'application de pré-contraintes qui sont nécessaires aux mesures en compression.

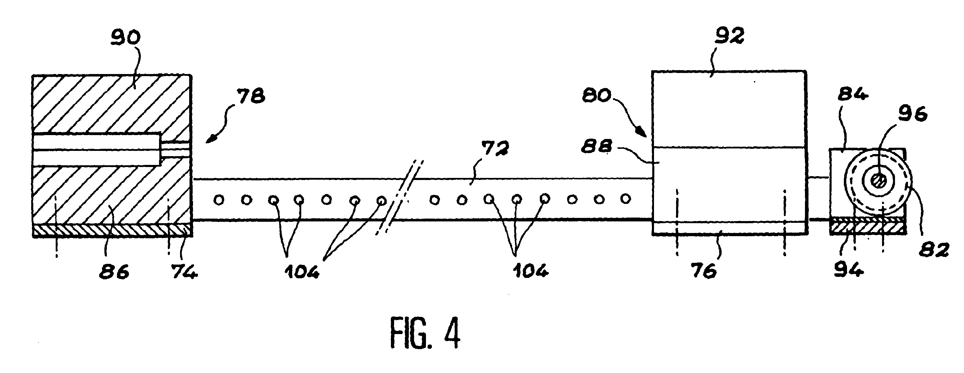

Cet exemple de banc de montage est schématiquement représenté sur la figure 4 et comprend une tige d'assemblage 72, des plaques 74 et 76, des embouts d'ancrage 78 et 80, une poulie 82, un support de poulie 84, et chaque embout d'ancrage 78 ou 80 comprend un support d'ancre 86 ou 88 ainsi qu'un couvercle d'ancre 90 ou 92. on voit aussi une plaque 94 sous le socle de support de poulie. L'axe de cette poulie a la référence 96.

Toutes ces pièces sont assemblées comme on le voit sur la figure 4.

La tige d'assemblage 72 assure le maintien de l'ensemble ainsi que la coaxialité des divers composants en fonction de la base de mesure choisie.

Les plaques 74-76 ou 94 supportent les ancres ou le support de la poulie. Ces plaques se fixent sous la tige d'assemblage 72.

Dans les deux supports d'ancre sont déposés les embouts des extensomètres lors du montage.

Autour de la poulie, la fibre optique prend place pour être pré-tendue.

On décrit maintenant la fabrication d'un extensomètre conforme à l'invention.

Dans cet exemple on considère la fabrication d'un extensomètre de base, comprenant une fibre optique contenant un seul réseau de Bragg, un tube et deux embouts.

Dans une étape 1, on nettoie les deux embouts métalliques. Pour ce faire, on dégraisse ces embouts avec, par exemple, du trichloro 111 éthane.

Dans une étape 2, on nettoie la surface extérieure de la fibre optique. Pour ce faire, cette fibre optique est délicatement nettoyée avec de l'acétone sur les portions où elle devra être collée ou soudée.

Dans une étape 3, on repère et l'on marque sur la fibre des zones extérieures au collage ou au soudage dans les embouts. Si l'on note $L_b$ (figure 1) la base de mesure de l'extensomètre et Le la longueur de chaque embout (figure 1), deux marques seront inscrites sur la fibre aux distances $L_b/2 + L_e + 1$ cm, de part et d'autre de la localisation du réseau de Bragg. Ces marques permettent de positionner correctement ce réseau de Bragg au centre du tube.

Dans une étape 4, on enfile les divers éléments sur la fibre. Ces éléments sont enfilés dans l'ordre sur cette fibre, à savoir l'embout gauche, le tube et l'embout droit, en laissant les filetages vers l'extérieur.

Dans une étape 5, on adapte le banc de montage à la base de mesure $L_b$ des extensomètres que l'on veut fabriquer et l'on positionne les deux plaques 74 et 76 solidaires des supports d'ancre sur deux plaques chauffantes (non représentées).

Dans une étape 6, on positionne les éléments séparés de l'extensomètre sur le banc de montage. On place les deux embouts dans les supports correspondant du banc de montage et l'on ajuste le tube de l'extensomètre afin que ce tube ne soit pas en butée dans un embout. On fait coulisser la fibre afin de visualiser les deux marques sur cette fibre à l'extérieur des deux embouts. L'embout droit est celui qui est à proximité de la poulie.

Ensuite, les étapes diffèrent selon que la fibre optique est métallisée ou non métallisée.

Dans le cas où la fibre optique n'a qu'un revêtement en polymère, on décrit maintenant la procédure de collage qui correspond aux étapes 7a à 15a. On verra ensuite la fin du procédé dans le cas où la fibre est métallisée et, dans ce cas, on décrira les étapes correspondantes 7b à 9b.

L'étape 7a est une étape de préparation de l'adhésif destiné au collage. Après des tests de résistance mécanique et des mesures d'absence de fluage sous charge à différentes températures, on a choisi, en tant qu'adhésif, une colle époxy à deux composants pour le collage de la fibre dans ses embouts. Le pesage et le mélange des deux composants de cet adhésif, à savoir la résine et le durcisseur, sont réalisés dans une coupelle préalablement nettoyée.

L'étape 8a est une étape de fluidification de l'adhésif. Cet adhésif est chauffé à une température de 40°C afin de le fluidifier sans toutefois commencer la polymérisation. Il est ainsi possible de l'aspirer avec une seringue.

L'étape 9a est une étape d'injection de la résine dans l'embout gauche. On injecte cette résine dans cet embout gauche par le trou 98 (figure 1) qui est usiné à partir de la surface de cet embout, au centre de celui-ci.

Quand la résine commence à apparaître à la sortie de l'embout, on arrête l'injection.

L'étape 10a est une étape de polymérisation de la résine. On place sur l'embout un couvercle d'ancre afin d'assurer une bonne conductivité thermique. On positionne une sonde de température dans la partie filetée de l'embout et l'on augmente la température jusqu'à 105°C pendant deux heures puis jusqu'à 175°C pendant 4 heures puis on effectue un recuit à 230°C pendant 16 heures. Le cycle de polymérisation est fonction de la résine utilisée.

L'étape 11a est une étape de soudure du tube métallique dans l'embout gauche. On chauffe dans la masse cet embout et le tube à la température de fusion de la soudure. La soudure utilisée est une soudure à l'étain qui est connue en électronique. On dépose, en la faisant fondre, de la soudure dans le trou de l'embout usiné à cet effet et sur l'extrémité du tube.

L'étape 12a est une étape de soudure du tube métallique dans l'embout droit. La procédure est la même qu'à l'étape 11a.

L'étape 13a est une étape de pré-tension de la fibre. Pour induire une pré-tension sur la fibre, on fait passer l'extrémité droite de la fibre autour de la poulie et on lui suspend une masse préalablement calibrée. Pour une fibre monomode classique, dont la gaine optique (« optical cladding ») a un diamètre de 125 $\mu$m, une masse de 100 g induit typiquement une pré-tension de 1000 $\mu$m/m.

On maintient la pré-tension pendant les étapes qui suivent.

L'étape 14a est une étape d'injection de résine dans l'embout droit. La procédure est la même qu'à l'étape 9a.

L'étape 15a est une étape de polymérisation de la résine injectée dans l'embout droit. La procédure est la même qu'à l'étape 10a.

L'extensomètre de base, dans le cas où le revêtement est un polymère, est alors achevé.

Dans le cas où la fibre est métallisée, la fin du procédé de fabrication comprend les étapes 7b à 10b.

Dans l'étape 7b, on soude simultanément la fibre dans l'embout gauche et cet embout dans le tube.

Dans l'étape 8b, on met la fibre en pré-tension. La procédure est la même qu'à l'étape 13a.

Dans l'étape 9b, on soude simultanément la fibre dans l'embout droit et cet embout dans le tube.

L'extensomètre de base à fibre métallisée est alors achevé.

Une étape 16, utilisable dans le cas où la fibre est métallisée ou non, consiste en la mise en place de câbles de protection 100 de la fibre (figure 1).

Afin de protéger la fibre qui sort de chaque côté des embouts, ces câbles de protection 100 sont enfilés. Chaque câble 100 est fixé sur l'embout correspondant à l'aide d'un presse-étoupe 102 qui se visse à l'intérieur de l'embout sur la partie filetée prévue à cet effet.

Donnons une précision supplémentaire pour le montage d'un extensomètre au moyen du banc de montage de la figure 4. On voit sur cette figure 4 que la tige 72 est pourvue, sur sa longueur, de trous 104 régulièrement espacés les uns des autres. Ces trous 104 servent à adapter la distance entre deux embouts consécutifs conformément à la longueur du tube et à la base de mesure choisie.

**Revendications**

1. Extensomètre comprenant :

   - une fibre optique (4), dans laquelle est formé au moins un réseau de Bragg (R ; R1, R2, R3), et
   - au moins un corps d'épreuve (8) qui est destiné à être rendu rigidement solidaire d'un matériau-hôte (2) et qui entoure une partie de la fibre optique contenant ce réseau de Bragg,

   toute déformation du matériau-hôte étant ainsi transmise à ce réseau de Bragg par l'intermédiaire du corps d'épreuve, ce réseau de Bragg étant alors apte à modifier une lumière se propageant dans la fibre, la déformation du matériau-hôte étant déterminée à partir de la lumière modifiée, cet extensomètre étant **caractérisé en ce que** le corps d'épreuve comprend un tube (16) dans lequel est disposée la partie de la fibre optique contenant le réseau de Bragg, les deux extrémités de cette partie étant respectivement fixées aux deux extrémités de ce tube et cette partie étant tendue, c'est-à-dire mise en pré-tension, entre ces deux extrémités du tube.

2. Extensomètre selon la revendication 1, dans lequel le corps d'épreuve comprend en outre deux embouts (18, 20) respectivement fixés aux deux extrémités du tube et la partie de la fibre est tendue entre ces deux embouts.

3. Extensomètre selon la revendication 2, dans lequel les deux embouts (18, 20) sont métalliques, la fibre optique (4) est métallisée et les deux extrémités de la partie de cette fibre sont respectivement soudées aux deux embouts.

4. Extensomètre selon la revendication 2, dans lequel les deux extrémités de la partie de la fibre (4) sont respectivement collées aux deux embouts (18, 20).

5. Extensomètre selon l'une quelconque des revendications 2 à 4, dans lequel les deux extrémités du tube (16) sont respectivement soudées aux deux embouts (18, 20).

6. Extensomètre selon la revendication 5, dans lequel le tube (16) et les deux embouts (18, 20) sont métalliques et les deux extrémités du tube sont respectivement soudées aux deux embouts par une soudure à l'étain.

7. Extensomètre selon l'une quelconque des revendications 2 à 6, dans lequel le corps d'épreuve (8) est destiné à être noyé dans le matériau-hôte (2) et les deux embouts sont respectivement pourvus de deux moyens (22, 24) d'ancrage dans le matériau-hôte.

8. Extensomètre selon l'une quelconque des revendications 2 à 6, dans lequel le corps d'épreuve (8) est destiné à être fixé à la surface du matériau-hôte (2) et les deux embouts sont respectivement pourvus de deux moyens (42, 44) de fixation ou de collage à cette surface du matériau-hôte.

9. Extensomètre selon l'une quelconque des revendications 1 à 8, comprenant une pluralité de corps d'épreuve (58, 60, 62, 63) montés en série.

10. Procédé de fabrication de l'extensomètre selon l'une quelconque des revendications 1 à 9, dans lequel on tend la partie de la fibre optique (4) entre les deux extrémités du tube (16) et l'on fixe les deux extrémités de cette partie aux deux extrémités du tube.

**Claims**

1. Extensometer comprising:

   - an optical fiber (4), in which at least one Bragg grating (R; R1, R2, R3) is formed, and,
   - at least one proof body (8) that is intended to be rigidly fixed to a host material (2) and that surrounds part of the optical fiber containing this Bragg grating,

   any deformation of the host material being thus transmitted to this Bragg grating through the proof body, this Bragg grating then being capable of modifying a light propagating in the fiber, the deformation of the host material being determined from the modified light,
   this extensometer being **characterized in that** the proof body comprises a tube (16) in which the part of the optical fiber containing the Bragg grating is placed, the two ends of this part being respectively fixed to the two ends of this tube and this part being tensioned, i.e. pre-tensioned, between these two ends of the tube.

2. Extensometer according to claim 1, in which the proof body also comprises two end pieces (18, 20) respectively fixed to the two ends of the tube and the part of the fiber is tensioned between these two end pieces.

3. Extensometer according to claim 2, in which the two end pieces (18, 20) are metallic, the optical fiber (4) is metallized and the two ends of the part of this fiber are respectively soldered to the two end pieces.

4. Extensometer according to claim 2, in which the two ends of the part of the fiber (4) are respectively glued to the two end pieces (18, 20).

5. Extensometer according to any one of claims 2 to 4, in which the two ends of the tube (16) are respectively soldered to the two end pieces (18, 20).

6. Extensometer according to claim 5, in which the tube (16) and the two end pieces (18, 20) are metallic and the two ends of the tube are respectively soldered to the two end pieces by a tin solder.

7. Extensometer according to any one of claims 2 to 6, in which the proof body (8) is intended to be embedded in the host material (2) and the two end pieces are respectively provided with two means (22, 24) of anchorage into the host material.

8. Extensometer according to any one of claims 2 to 6, in which the proof body (8) is intended to be fixed to the surface of the host material (2) and the two end pieces are respectively provided with two means (42, 44) for attachment or gluing to this surface of the host material.

9. Extensometer according to any one of claims 1 to 8, comprising a plurality of proof bodies (58, 60, 62, 63) mounted in series.

10. Process for manufacturing the extensometer according to any one of claims 1 to 9, in which the part of the optical

9

fiber (4) between the two ends of the tube (16) is tensioned and the two ends of this part are fixed to the two ends of the tube.

**Patentansprüche**

1. Dehnungsmesser, umfassend:

   - eine optische Faser (4), in der wenigstens ein Bragg-Gitter (R ; R1, R2, R3) ausgebildet ist, und
   - wenigstens einen Probenaufnahmekörper (8), der dazu bestimmt ist, starr mit einem Wirtsmaterial (2) verbunden zu werden und der einen dieses Bragg-Gitter enthaltenden Teil der optischen Faser umgibt,

   wobei auf diese Weise jede Verformung des Wirtsmaterials mittels dieses Probenaufnahmekörpers auf dieses Bragg-Gitter übertragen wird, dieses Bragg-Gitter dann fähig ist, ein Licht zu modifizieren, das sich in der Faser ausbreitet und die Verformung des Wirtsmaterials aufgrund des modifizierten Lichts bestimmt wird,
   wobei dieser Dehnungsmesser **dadurch gekennzeichnet ist, dass** der Probenaufnahmekörper ein Rohr (16) umfasst, in dem sich der das Bragg-Gitter enthaltende Teil der optischen Faser befindet, wobei die beiden Enden dieses Teils jeweils an den beiden Enden dieses Rohrs befestigt sind und dieser Teil zwischen diesen beiden Enden des Rohrs gespannt ist, das heißt einer Vorspannung ausgesetzt ist.

2. Dehnungsmesser nach Anspruch 1, bei dem der Probenaufnahmekörper außerdem zwei jeweils an den beiden Enden des Rohrs befestigte Endstücke (18, 20) umfasst und der genannte Teil der Faser zwischen diesen beiden Endstücken gespannt ist.

3. Dehnungsmesser nach Anspruch 2, bei dem die beiden Endstücke (18, 20) metallisch sind, die optische Faser (4) metallisiert ist und die beiden Enden des genannten Teils dieser Faser jeweils mit den beiden Endstücken verlötet sind.

4. Dehnungsmesser nach Anspruch 2, bei dem die beiden Enden des genannten Teils der Faser (4) jeweils an den beiden Endstücken festgeklebt sind.

5. Dehnungsmesser nach einem der Ansprüche 2 bis 4, bei dem die beiden Enden des Rohrs (16) jeweils mit den beiden Endstücken (18, 20) verlötet sind.

6. Dehnungsmesser nach Anspruch 5, bei dem das Rohr (16) und die beiden Endstücke (18, 20) metallisch sind und die beiden Enden des Rohrs jeweils durch eine Zinnlötung mit den beiden Endstücken verlötet sind.

7. Dehnungsmesser nach einem der Ansprüche 2 bis 6, dessen Probenaufnahmekörper (8) dazu bestimmt ist, in das Wirtsmaterial (2) eingebettet zu werden, und die beiden Endstücke mit Einrichtungen (22, 24) zur Verankerung in dem Wirtsmaterial ausgestattet sind.

8. Dehnungsmesser nach einem der Ansprüche 2 bis 6, dessen Probenaufnahmekörper (8) dazu bestimmt ist, an der Oberfläche des Wirtsmaterials (2) befestigt zu werden und die beiden Endstücken jeweils mit Einrichtungen (42, 44) zum Befestigen oder Festkleben an dieser Oberfläche des Wirtsmaterials ausgestattet sind.

9. Dehnungsmesser nach einem der Ansprüche 1 bis 8 mit einer Vielzahl in Reihe montierter Probenaufnahmekörper (58, 60, 62, 63).

10. Verfahren zur Herstellung von Dehnungsmessern nach einem der Ansprüche 1 bis 9, bei dem man den genannten Teil der optischen Faser (4) zwischen den beiden Enden des Rohrs (16) spannt und man die beiden Enden dieses Teiles an den beiden Enden des Rohrs befestigt.

FIG. 1

EP 1 377 793 B1

EP 1 377 793 B1

FIG. 2

FIG. 3

12

FIG. 4

EP 1 377 793 B1

## RÉFÉRENCES CITÉES DANS LA DESCRIPTION

**Documents brevets cités dans la description**

- FR 9904084

- FR 0000806 W

**Littérature non-brevet citée dans la description**

- **V. Dewynter-Marty ; S. Rougeault ; P. Ferdinand ; D. Chauvel ; E. Toppani ; M. Leygonie ; B. Jarret ; P. Fenaux.** Concrete strain measurements and crack detection with surface-mounted and embedded Bragg grating extensometers. *12th International Conférence on Optical Fiber Sensors,* 28 Octobre 1997, 600-603